# EUROPEAN PATENT APPLICATION

(11) **EP 2 600 507 A2**
(43) Date of publication of application: **05.06.2013**
(21) Application number: 12194354.2
(22) Date of filing: 27.11.2012
(51) Int. Cl.: H02K 15/03

(54) **Rotor for motor and method for manufacturing the same**

(30) Priority: 30.11.2011 JP 2011261352
(71) Applicant: JTEKT CORPORATION, Osaka-shi Osaka 542-8502 (JP)
(72) Inventor: Nagahama, Takaya, Osaka-shi, Osaka 542-8502 (JP); Naka, Masami, Osaka-shi, Osaka 542-8502 (JP); Shibata, Yoshiyuki, Osaka-shi, Osaka 542-8502 (JP); Nagase, Shigeki, Osaka-shi, Osaka 542-8502 (JP); Kageyama, Takashi, Osaka-shi, Osaka 542-8502 (JP)
(74) Representative: TBK

(57) **Abstract**

Non-holding portions (11) of a holding ring (10) are demagnetized by supplying a nonmagnetic element to the non-holding portions (11) while melting the non-holding portions (11) by the application of heat. Each non-holding portion (11) is demagnetized such that, from the melting center toward each melting end portion thereof, the material of the non-holding portion (11) moderately changes from a nonmagnetic material to a ferromagnetic material. The permeability moderately changes, and hence generation of cogging torque during rotation of a rotor is suppressed.

## Description

### BACKGROUND OF THE INVENTION

### 1. Field of the Invention

The invention relates to a rotor for a motor and a method for manufacturing the rotor. 2. Discussion of Background

As a compact motor, there is a surface permanent magnet synchronous motor (SPM). The SPM has a structure in which permanent magnets are attached to the outer periphery of a rotor core formed by laminating ferromagnetic plates, and a cylindrical holding ring is fitted onto an outer peripheral portion of the rotor core. The holding ring has a function of holding the permanent magnets so as to prevent the permanent magnets from being scatted by a centrifugal force that is generated when a rotor rotates at a high speed. When the holding ring is made of a ferromagnetic material, the amount of leakage flux that flows from a magnetic pole to an adjacent magnetic pole through the holding ring increases. As a result, the amount of main magnetic flux decreases, and accordingly the motor characteristics deteriorate, for example, the motor torque decreases.

To avoid this problem, for example, Japanese Patent Application Publication No. 6-133480 (JP 6-133480 A) describes a rotor in which the metallographic structure of a holding ring is formed of two phases, that is, a ferromagnetic phase and a nonmagnetic phase. More, specifically, JP 6-133480 A describes the rotor that has the holding ring which is manufactured from austenitic stainless steel that exhibits ferromagnetism through cold-working, and part of which is demagnetized by the application of heat. With this rotor, the saturation magnetic flux density is decreased and the permeability that is sufficiently higher than that of air is realized, so that the motor characteristics are improved.

However, in the rotor for a motor described in JP 6-133480 A, because part of the holding ring is demagnetized by the application of heat, the permeability drastically changes at the boundary between the nonmagnetic phase and the ferromagnetic phase. Therefore, cogging torque is generated during rotation of the rotor. Moreover, in the rotor for a motor described in JP 6-133480 A, because the holding ring is manufactured from austenitic stainless steel, the material cost is high. Therefore, it is necessary to process the holding ring such that the thickness thereof becomes very small, and hence the processing cost becomes high.

### SUMMARY OF THE INVENTION

The invention provides a rotor for a motor with which cogging torque is reduced at low cost, and a method for manufacturing the rotor.

According to a feature of an example of the invention, there is provided a rotor for a motor, including: a rotor core that is formed of a plurality of laminated ferromagnetic plates; a plurality of permanent magnets arranged at predetermined intervals in an outer periphery of the rotor core; and a holding ring disposed on an outer peripheral portion of the rotor core so as to come into contact with and hold the plurality of permanent magnets, wherein the holding ring is made of a ferric ferromagnetic material, and formed of holding portions that hold the permanent magnets and non-holding portions that do not hold the permanent magnets, and the non-holding portions are demagnetized by supplying a nonmagnetic element to the non-holding portions while melting the non-holding portions by application of heat.

According to another feature of an example of the invention, the non-holding portions in the holding ring are demagnetized by supplying the nonmagnetic element to the non-holding portions while changing a mixture ratio of the nonmagnetic element in a circumferential direction.

According to a further feature of an example of the invention, each of the non-holding portions in the holding ring is split into at least two regions, and demagnetized by supplying the nonmagnetic element to the respective split regions while melting the split regions by application of heat.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a plan view of a rotor for a motor;
FIG. 2 is a view showing a first heat melting method for demagnetizing a non-holding portion which does not hold a permanent magnet;
FIG. 3 is a view showing a second heat melting method for demagnetizing the non-holding portion which does not hold the permanent magnet;
FIG. 4 is a schematic sectional view showing a third heat melting method for demagnetizing the non-holding portion which does not hold the permanent magnet;
FIG. 5 is a schematic perspective view showing the third heat melting method for demagnetizing the non-holding portion which does not hold the permanent magnet; and
FIG. 6 is a graph showing a change in the permeability from the melting center to each melting end portion in the non-holding portion which does not hold the permanent magnet.

### DETAILED DESCRIPTION OF EMBODIMENTS

Hereinafter, embodiments of the invention will be described with reference to the accompanying drawings.

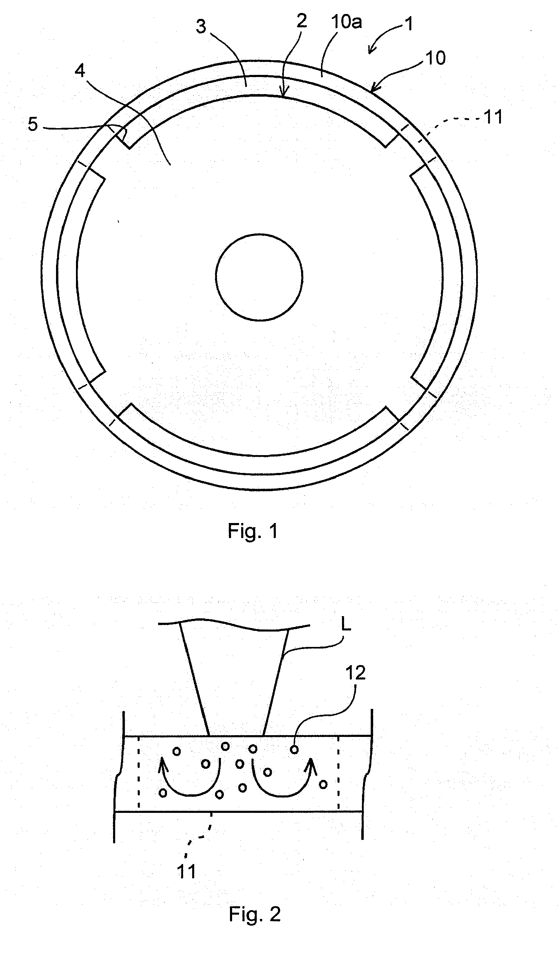

The structure of a rotor for a motor will be described below. As a rotor for a motor, a rotor for a SPM will be described with reference to FIG. 1. In the following description, "radial direction" and "axial direction" denote the radial direction and the axial direction of the rotor (a rotor core), respectively.

As shown in FIG. 1, a rotor 1 includes a rotor core 2, four permanent magnets 3, and a holding ring 10. The rotor core 2 is formed by laminating a plurality of thin disc-shaped ferromagnetic plates 4 which are, for example, magnetic steel plates. The four permanent magnets 3 are, for example, neodymium magnets, and each permanent magnet 3 is formed into a shape obtained by cutting a hollow cylinder, which has substantially the same radius as that of the rotor core 2, in the circumferential direction such that each magnet has a surface in the shape of an arc of which the angle is smaller than 90 degrees when viewed from the axial direction. The four permanent magnets 3 are arranged at predetermined intervals in an outer peripheral portion of the rotor core 2. That is, the permanent magnets 3 are fixedly accommodated in respective four slots 5 which are formed in the outer peripheral portion of the rotor core 2 at intervals of 90 degrees and have substantially the same shape as that of the permanent magnets 3. The permanent magnets 3 are arranged such that part of the rotor core 2 is interposed between the permanent magnets 3 next to each other in the circumferential direction.

The holding ring 10 is obtained by forming, for example, a rolled steel plate made of a ferromagnetic material into an annular shape having an inner diameter substantially equal to the diameter of the rotor core 2. The holding ring 10 is disposed on the outer peripheral portion of the rotor core 2, and formed of holding portions 10a that hold the respective permanent magnets 3, and non-holding portions 11 that do not hold the permanent magnets 3. The non-holding portions 11 are demagnetized by supplying a nonmagnetic element to the non-holding portions 11 while melting the non-holding portion 11 by the application of heat.

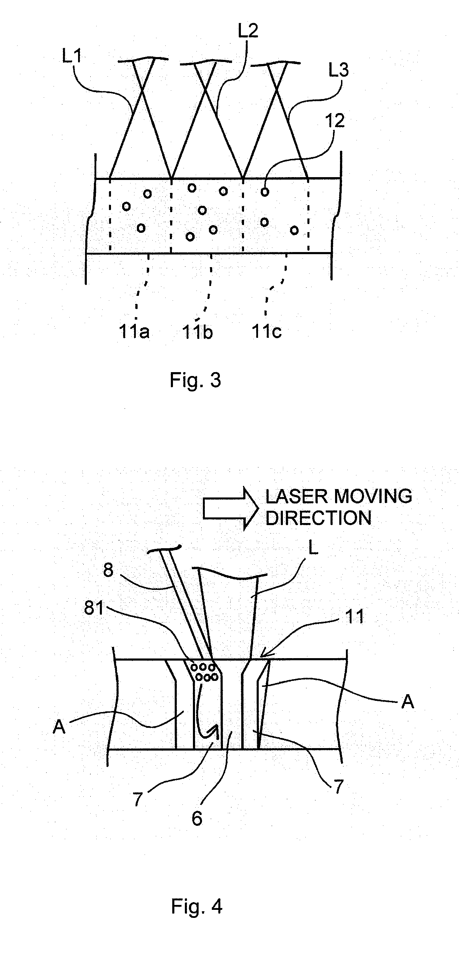

The non-holding portions 11 are demagnetized by supplying the nonmagnetic element (manganese, nickel or the like) while changing the mixture ratio of the nonmagnetic element such that the permeability moderately changes at the boundaries between the non-holding portions 11 and the holding portions 10a, i.e., the boundaries between the nonmagnetic material and the ferromagnetic material. As shown in, for example, FIG. 2, the circumferential center of the outer peripheral portion of each non-holding portion 11 (the outer peripheral portion of the holding ring 10) is irradiated with a laser L to melt the circumferential center of the non-holding portion 11 by the application of heat, and a supplied nonmagnetic element 12 is agitated as shown by arrows in FIG. 2 to demagnetize the non-holding portion 11. Alternatively, as shown in FIG. 3, each non-holding portion 11 is split into three regions in the circumferential direction. While irradiating outer peripheral portions of split regions 11a, 11b, 11c with lasers L1, L2, L3 and melting the split regions 11a, 11b, 11c by the application of heat, a larger amount of the nonmagnetic element 12 is supplied to the center split region 11b, and a smaller amount of the nonmagnetic element 12 is supplied to the split regions 11a, 11c on respective sides of the center split region 11b to demagnetize the non-holding portion 11. Note that, the number of split regions is not limited to three as long as there are at least two split regions.

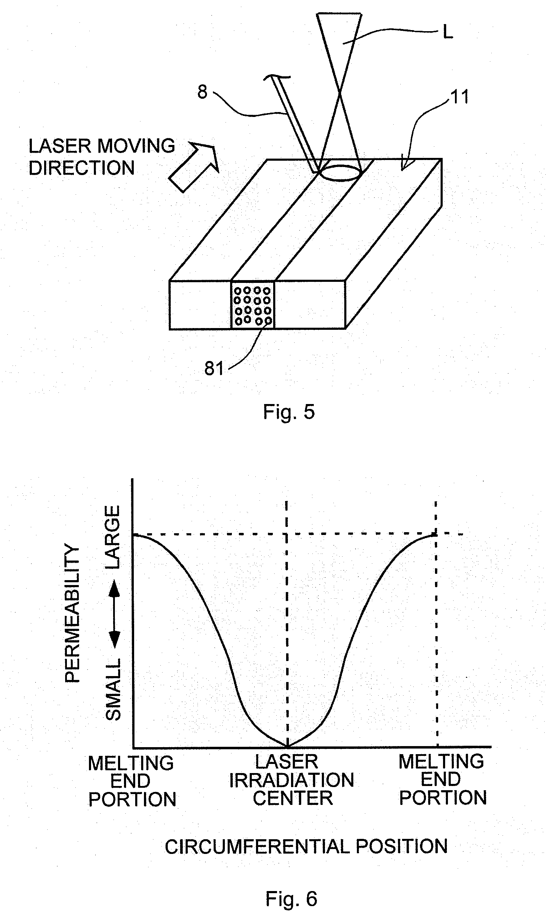

Further alternatively, each non-holding portion 11 may be heated by high-density energy to form a keyhole, a molten pool may be formed around the keyhole, and the nonmagnetic element may be disposed in the molten pool to demagnetize the non-holding portion 11. A demagnetization process for demagnetizing the non-holding portions 11 will be described with reference to FIG. 4 and FIG. 5. The demagnetization process includes a keyhole forming step and an element disposing step. The keyhole forming step is a step of forming a keyhole 6 by irradiating each non-holding portion 11 of the holding ring 10 with the laser L from the outer peripheral portion of the non-holding portion 11 (the outer peripheral portion of the holding ring 10). The keyhole 6 is a round hole that is formed through irradiation of the non-holding portion 11 with the laser L, and that extends through the non-holding portion 11 which is irradiated with the laser L, from the outer peripheral portion to the inner peripheral portion. When the keyhole 6 is formed, vaporized metal is generated, and a molten pool 7 is formed around the keyhole 6 by a metal vaporization pressure and a base material surface tension.

In the element disposing step, an alloy element 81 is disposed in the molten pool 7 around the keyhole 6 and is formed into a solid solution alloy. A wire 8 made of the nonmagnetic element 81 (nonmagnetic element, for example, manganese or nickel) is disposed near a laser L irradiating position on the outer peripheral portion of the non-holding portion 11. Then, the laser L irradiating position is moved relative to the outer peripheral portion of the non-holding portion 11, and the wire 8 is also moved relative to the outer peripheral portion of the non-holding portion 11 in accordance with the movement of the laser L irradiating position. When the laser L irradiating position moves relative to the outer peripheral portion of the non-holding portion 11, the keyhole 6 at a preceding irradiating position is filled with the molten non-holding portion 11. A heat-affected portion A affected by heat is formed around the molten pool 7.

The wire 8 contacts the molten pool 7 and is molten, and the molten wire 8 (i.e. the nonmagnetic element 81) is mixed and diffused into the molten pool 7. In the molten pool 7, convection (see an arrow in FIG. 4) is easily generated, and hence the nonmagnetic element 81 is diffused in the radial direction of the non-holding portion 11, and supplied from the outer peripheral portion to the inner peripheral portion of the non-holding portion 11. In this way, the non-holding portion 11 is alloyed and changed into a nonmagnetic material.

A method for manufacturing a rotor for a motor will be described below. Manganese is supplied to each non-holding portion 11 of the holding ring 10, which does not hold the permanent magnet 3, while irradiating the non-holding portion 11 with, for example, the laser L, to melt the non-holding portion 11 by the application of heat, and changing the mixture ratio of the manganese. In this way, the non-holding portion 11 is demagnetized. Next, the permanent magnets 3 are fixedly fitted in the respective slots 5 of the rotor core 2. Then, the holding ring 10 is fixedly fitted onto the rotor core 2. In this way, the rotor 1 is obtained.

Note that in the technical field of welding, a keyhole is a deep small hole formed during welding such as laser welding, electron beam welding or arc welding. When multiple members are welded together, a keyhole is formed in one of the members to weld the one member to the other member. Specifically, when a heat such as a laser is applied to the surface of the one member, the keyhole is formed in the one member to weld the back surface side of the one member to the front surface side of the other member. However, the keyhole 6 formed in the demagnetization process differs from the keyhole used in the keyhole welding for welding multiple layers together, in that the keyhole 6 is formed in each single-layered non-holding portion 11 to magnetically reform the non-holding portion 11 evenly from the outer peripheral portion to the inner peripheral portion thereof, regardless of the thickness of the non-holding portion 11. As described above, the technical field of the welding is completely different from the technical field of magnetic reforming.

The operation and advantageous effects of the rotor for a motor will be described below. Each non-holding portion 11 of the holding ring 10 is demagnetized by supplying the nonmagnetic element to the non-holding portion 11 while melting the non-holding portion 11 by the application of heat. In the non-holding portion 11, the nonmagnetic element forms the alloy, and demagnetization advances, but the whole non-holding portion is not evenly demagnetized. As shown in FIG. 6, from the melting center of the non-holding portion 11 toward each melting end portion thereof in the circumferential direction, the permeability gradually increases, i.e., the material of the non-holding portion 11 moderately changes from the nonmagnetic material to the ferromagnetic material. Therefore, generation of cogging torque during the rotation of the rotor 1 is suppressed.

Each non-holding portion 11 is demagnetized, by changing the mixture ratio of the nonmagnetic element in the circumferential direction, melting the center of the non-holding portion 11 by the application of heat and agitating the nonmagnetic element. In the non-holding portion 11, because a heat melting center portion has a high temperature, the nonmagnetic element forms the alloy, and the demagnetization advances. However, in the non-holding portion 11, as the distance from the heat melting center increases, the temperature decreases, and hence the nonmagnetic element is less likely to form the alloy. As a result, from the melting center toward the melting end portions in the non-holding portion 11, the material of the non-holding portion 11 is moderately changed from the nonmagnetic material to the ferromagnetic material.

Also, each non-holding portion 11 is split into three regions, and demagnetized by supplying the nonmagnetic element to the split regions 11a, 11b, 11c while melting the split regions 11a, 11b, 11c by the application of heat. As a result, from the melting center toward the melting end portions in the non-holding portion 11, the material of the non-holding portion 11 is moderately changed from the nonmagnetic material to the ferromagnetic material.

Also, each non-holding portion 11 is irradiated with high-density energy and heated to form the keyhole by the metal vaporization pressure and the base material surface tension, and the nonmagnetic element disposed in the molten pool 7 around the keyhole 6 is formed into a solid solution alloy to demagnetize the non-holding portion 11. As a result, the non-holding portion 11 is demagnetized deeply in the radial direction, and the holding ring 10 is processed so as to have a large thickness. Therefore, the processing cost is reduced. In addition, the strength of the holding ring 10 is increased, and therefore breakage of the holding ring 10 due to a centrifugal force during rotation of the rotor 1 is prevented.

Moreover, a ferric ferromagnetic material is used to form the holding ring 10, and hence the material cost is low. Therefore, the holding ring 10 is processed such that the thickness thereof is larger than that of a conventional very thin holding ring. As a result, the processing cost is reduced.

The invention may be implemented in the following alternative embodiments. In the above-described embodiment, the wire 8 made of the nonmagnetic element 81 is disposed near the laser L irradiating position on the outer peripheral portion of the non-holding portion 11, and the nonmagnetic element 81 is supplied to the molten pool 7 formed around the keyhole 6 to perform the demagnetization process. Alternatively, the demagnetization process may be performed in the following method. That is, pellets made of the nonmagnetic element 81 are placed on the outer peripheral portion of the non-holding portion 11, the pellets made of the nonmagnetic element 81 are driven into the outer peripheral portion of the non-holding portion 11 through press working, and the pellets made of the nonmagnetic element 81 are irradiated with the laser L to perform the demagnetization process. Further alternatively, powder, coarse particles or thin films made of the nonmagnetic element 81 are placed on the outer peripheral portion of the non-holding portion 11, and the powder, the coarse particles, or the thin films made of the nonmagnetic element 81 are irradiated with the laser L to perform the demagnetization process. In addition, means for melting the non-holding portion 11 may be any means as long as high-density energy is emitted. In place of the laser L, for example, electron beams may be used.
Non-holding portions (11) of a holding ring (10) are demagnetized by supplying a nonmagnetic element to the non-holding portions (11) while melting the non-holding portions (11) by the application of heat. Each non-holding portion (11) is demagnetized such that, from the melting center toward each melting end portion thereof, the material of the non-holding portion (11) moderately changes from a nonmagnetic material to a ferromagnetic material. The permeability moderately changes, and hence generation of cogging torque during rotation of a rotor is suppressed.

## Claims

1. A rotor for a motor, comprising:
a rotor core that is formed of a plurality of laminated ferromagnetic plates;
a plurality of permanent magnets arranged at predetermined intervals in an outer periphery of the rotor core; and
a holding ring disposed on an outer peripheral portion of the rotor core so as to come into contact with and hold the plurality of permanent magnets,
**characterized in that** the holding ring is made of a ferric ferromagnetic material, and formed of holding portions that hold the permanent magnets and non-holding portions that do not hold the permanent magnets, and the non-holding portions are demagnetized by supplying a nonmagnetic element to the non-holding portions while melting the non-holding portions by application of heat.

2. The rotor for a motor according to claim 1, wherein the non-holding portions in the holding ring are demagnetized by supplying the nonmagnetic element to the non-holding portions while changing a mixture ratio of the nonmagnetic element in a circumferential direction.

3. The rotor for a motor according to claim 2, wherein the non-holding portions in the holding ring are demagnetized by melting a circumferential center of each of the non-holding portions by application of heat and agitating the nonmagnetic element.

4. The rotor for a motor according to claim 2, wherein each of the non-holding portions in the holding ring is split into at least two regions, and demagnetized by supplying the nonmagnetic element to the respective split regions while melting the split regions by application of heat.

5. The rotor for a motor according to any one of claims 1 to 4, wherein the non-holding portions in the holding ring are demagnetized by heating each of the non-holding portions by high-density energy to form a keyhole and form a molten pool around the keyhole, and disposing the nonmagnetic element in the molten pool.

6. A method for manufacturing a rotor for an electric motor, the rotor including:
a rotor core that is formed of a plurality of laminated ferromagnetic plates;
a plurality of permanent magnets arranged at predetermined intervals in an outer periphery of the rotor core; and
a holding ring that is disposed on an outer peripheral portion of the rotor core, that is made of a ferric ferromagnetic material, and that is formed of holding portions which hold the permanent magnets and non-holding portions which do not hold the permanent magnets,
the method **characterized in that** the non-holding portions are demagnetized by supplying a nonmagnetic element to the non-holding portions while melting the non-holding portions by application of heat.

7. The method for manufacturing the rotor according to claim 6, wherein the non-holding portions in the holding ring are demagnetized by supplying the nonmagnetic element to the non-holding portions while changing a mixture ratio of the nonmagnetic element in a circumferential direction.

8. The method for manufacturing the rotor according to claim 6, wherein the non-holding portions in the holding ring are demagnetized by melting a circumferential center of each of the non-holding portions by application of heat and agitating the nonmagnetic element.

9. The method for manufacturing the rotor according to claim 6, each of the non-holding portions in the holding ring is split into at least two regions, and demagnetized by supplying the nonmagnetic element to the respective split regions while melting the split regions by application of heat.

10. The method for manufacturing the rotor according to any one of claims 6 to 9, **characterized in that** the non-holding portions in the holding ring are demagnetized by heating each of the non-holding portions by high-density energy to form a keyhole and form a molten pool around the keyhole, and disposing the nonmagnetic element in the molten pool.
